# EUROPEAN PATENT APPLICATION

(11) **EP 3 023 967 A1**
(43) Date of publication of application: **25.05.2016**
(21) Application number: 14194143.5
(22) Date of filing: 20.11.2014
(51) Int. Cl.: G09B 9/16, G06F 3/0481

(54) **Methods, systems, and computer readable media for cursor and text entry for aircraft interface simulation**

(71) Applicant: Airbus (S.A.S.), 31700 Blagnac (FR)
(72) Inventor: Wheller, Katharyn, 31140 Pechbonnieu (FR); Rubio-Ortiz, Wilfred, 31700 Mondonville (FR); Metivet, Stéphane, 31320 Castanet Tolosan (FR); Dupuy, Jacques-André, 81600 Tecou (FR)
(74) Representative: Sarraméa, Claude

(57) **Abstract**

Methods, devices, and computer readable media are disclosed for simulating user interactions with a simulated aircraft cockpit, for example and without limitation, for aircraft simulation and training uses. In some aspects, a system for simulating user interactions with a simulated aircraft cockpit includes a simulation server including a hardware processor and configured to receive user interaction data from an interactive device and compute an output data based on the received user interaction data. In addition, the system also includes an application module configured to render the output data on a simulated aircraft cockpit screen.

## Description

### TECHNICAL FIELD

The subject matter described herein relates generally to aircraft cockpit simulations. More particularly, the subject matter disclosed herein relates to methods, devices, and computer readable media for simulating user interactions with a simulated aircraft cockpit.

### BACKGROUND

Recent generations of aircraft enable pilots and operators to interact with the aircraft control systems using a concept similar to standard personal computers. Certain aircraft display units, such as navigational displays (NDs), operational information systems (OISs), and multi-function displays (MFDs), display information that can be controlled by the use of a dedicated keyboard cursor control unit (KCCU). This control unit enables the movement of an avionics cursor or textual entries in the data fields on an aircraft display unit.

KCCUs utilize trackballs, wheels, validation buttons, navigation keys, and alphabetical keys similar to traditional personal computer inputs, offering operators ease-of-use in manipulating the multiple displays disposed about the aircraft control panel.

Accordingly, there is a need for methods, systems, and computer readable media that provide pilots and other operators the opportunity to simulate the use of an aviation cursor and/or textual entries in manipulating the aircraft displays. There is a further need for methods, systems, and computer readable media that offer a simulation of the interface that is as close as possible to the real cockpit, aircraft displays, and associated controls without impeding the ease of interaction or the functionality of the simulation.

### SUMMARY

According to one aspect, the subject matter described herein comprises a system for simulating user interactions with a simulated aircraft cockpit, as mentioned in claim 1.

According to another aspect, the subject matter described herein comprises a method for simulating user interactions with a simulated aircraft cockpit, as mentioned in claim 10.

According to another aspect, the subject matter described herein comprises a non-transitory computer readable medium having stored thereon executable instructions for simulating user interactions with a simulated aircraft cockpit, as mentioned in claim 15.

As used herein, the terms "function", "application", and/or "module" refer to software in combination with hardware and/or firmware for implementing features described herein.

The subject matter described herein can be implemented in software in combination with hardware and/or firmware. For example, the subject matter described herein may be implemented in software executed by one or more processors. In one exemplary implementation, the subject matter described herein may be implemented using a non-transitory computer readable medium having stored thereon computer executable instructions that when executed by the processor of a computer control the computer to perform steps. Exemplary computer readable media suitable for implementing the subject matter described herein can include non-transitory computer readable media such as, for example and without limitation, disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings, of which:
Figure 1A is a diagram of an exemplary illustration of a system for simulating an aircraft cockpit with integrated interactive devices in accordance with aspects of the subject matter described herein;
Figure 1B is a diagram of an exemplary illustration of a keyboard cursor control unit (KCCU) in accordance with aspects of the subject matter described herein;
Figure 1C is a diagram of an exemplary illustration of a KCCU interacting with an avionics display in a simulated cockpit in accordance with aspects of the subject matter described herein;
Figure 1D is a diagram of another exemplary illustration of a KCCU interacting with an avionics display in a simulated cockpit in accordance with aspects of the subject matter described herein;
Figure 1E is a diagram illustrating an exemplary guidance message to inform a user to place the avionics cursor on the viewing screen in accordance with aspects of the subject matter described herein;
Figure 2 is a diagram of an exemplary illustration of a simulation system for simulating KCCU operations within an aircraft cockpit in accordance with aspects of the subject matter described herein; and
Figure 3 is a flow chart illustrating an exemplary method for managing user inputs to the cockpit simulation in accordance with aspects of the subject matter described herein.

### DETAILED DESCRIPTION

In accordance with the description herein and exemplary, associated drawings, novel methods, systems, and computer readable media are disclosed for simulating user interactions with a simulated aircraft cockpit. Such methods, systems and computer readable media are particularly suitable for use, for example and without limitation, for 3D modeling of a cockpit associated with an emulation of aircraft systems.

In some aspects, a system comprises a simulation server configured to receive user interaction data from an interactive device and compute an output data based on the received user interaction data can be provided to construct an interface as close as possible to a real life aircraft cockpit without impeding the ease of user interactions with the avionics instruments. The avionics instrument can, for example and without limitation, be a navigation display (ND), an onboard information system (OIS), a mail box interface, and/or a multi-function display (MFD). User interactions such as mouse movements and keystrokes are intercepted by an acquisition module and forwarded to the simulation server. The simulation server computes output data based on the received user interactions to display application modules. The display application modules render the user interactions on a 3D modeling of the aircraft cockpit.

In some aspects, user interactions come from or are generated by a keyboard cursor control unit (KCCU) placed on a central pedestal within the cockpit. The KCCU includes a set of cursor keys configured to select and activate an avionic instrument. Once an avionic instrument is activated, the user inputs aircraft operational commands via a keyboard on the KCCU. Commands such as flight plan modifications are received and performed by the simulation server and displayed on a navigation display via the display application module.

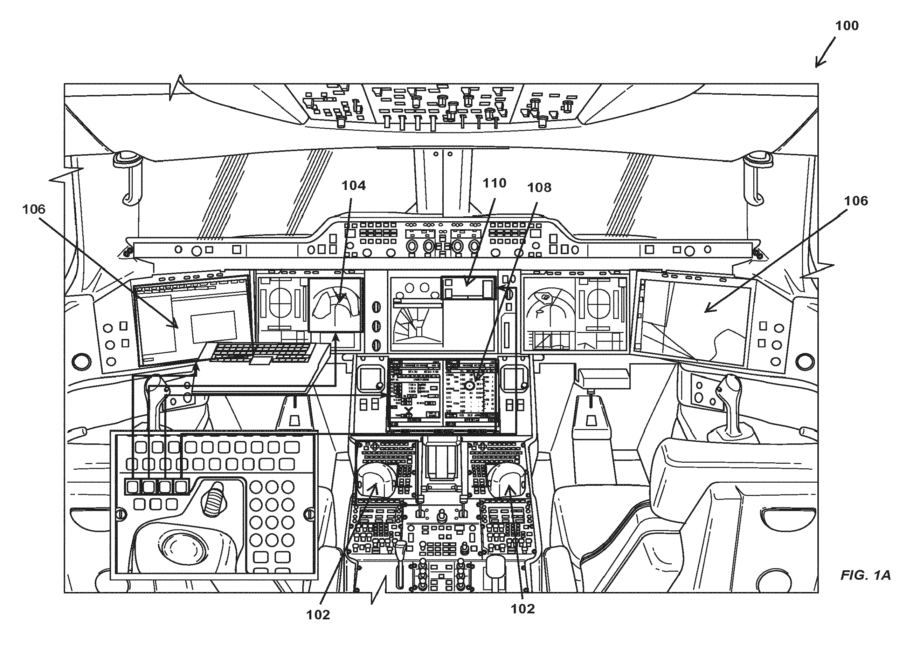

Figure 1A depicts an exemplary illustration of a system, generally designated **100,** for simulating an aircraft cockpit with integrated interactive devices in accordance with embodiments of the subject matter described herein. In some aspects, the interactive devices are Keyboard Cursor Control Units (KCCU) **102** configured to interact with a plurality of avionics instruments. As shown in figure 1A, the simulated aircraft cockpit can have two simulated KCCUs **102** located on the central pedestal, for both the captain and the first officer. In addition, the simulated cockpit can have two sets of interactive screens, one on the captain's side (left), another one on the first officer's side (right). Each set of interactive screens includes a navigation display (ND) **104** and an Onboard Information System (OIS) **106.** The OIS **106** includes a set of electronic documentation and applications for flight, maintenance and cabin operations. For the flight crew, these applications replace previously used paper documentation and charts and enable an easy access to the necessary information related to an operational need. Both the ND **104** and OIS **106** are accessed via the KCCUs **102.** Furthermore, the simulated aircraft cockpit includes a Multi-Function Display (MFD) **108** and a mailbox interface **110** configured to display mail messages. The MFD **108** is configured to display and control aircraft related data from sources such as the operator inputs on the interactive screens the Air Traffic Control (ATC), the SURVeillance (SURV), and/or the Flight Control Unit (FCU). Both the MFD **108** and the mail interface **110** are accessed by the KCCU **102.** For example, the interactive screens can display more than 50 pages of textual data including information on the flight plan, aircraft position and/or flight performance. The flight crew can navigate through the pages and consult, enter or modify the data via the KCCU **102.**

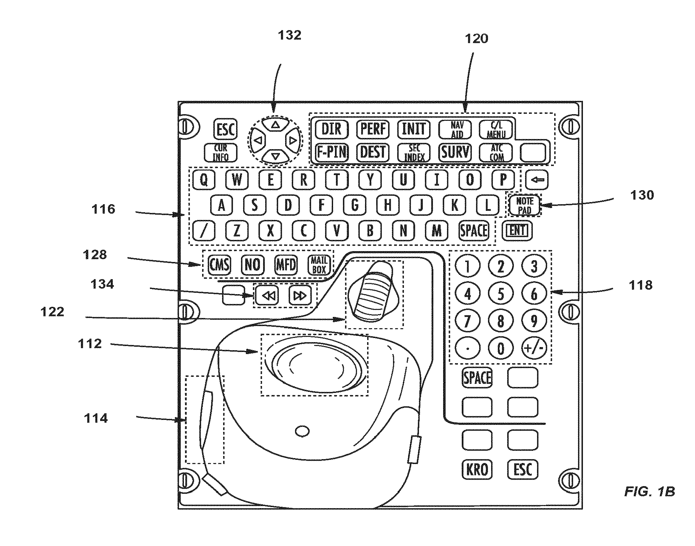

Figure 1B illustrates an exemplary embodiment of a KCCU **102** in accordance with embodiments of the subject matter described herein. The KCCU **102** includes a cursor-control trackball **112** and a selector **114** that allows crews to point and click through menus on the MFD **108** or to make flight plan alterations by selecting new waypoints on the ND **104,** including the vertical display. The KCCU **102** also houses or otherwise includes a keyboard with an alphabetic QWERTY keyboard **116,** functional shortcuts **120,** and a scrolling wheel **122,** numeric pad **118,** notepad keys **130,** cursor keys **128,** direction arrow keys **132,** navigation keys **134,** and a backup cursor control device (CCD). In some aspects, the flight crew uses the KCCU **102** to navigate through the displayed pages of textual data on the MFD **108,** enter and modify data on the MFD, and/or perform flight plan revisions on the lateral ND **104.** The cockpit includes two KCCU **102** units, allowing both the captain and the first officer to directly interact with the onside ND **104,** MFD **108,** and the mailbox interface **110.** Each KCCU displays its own avionics cursor, but only one can be active at any given time.

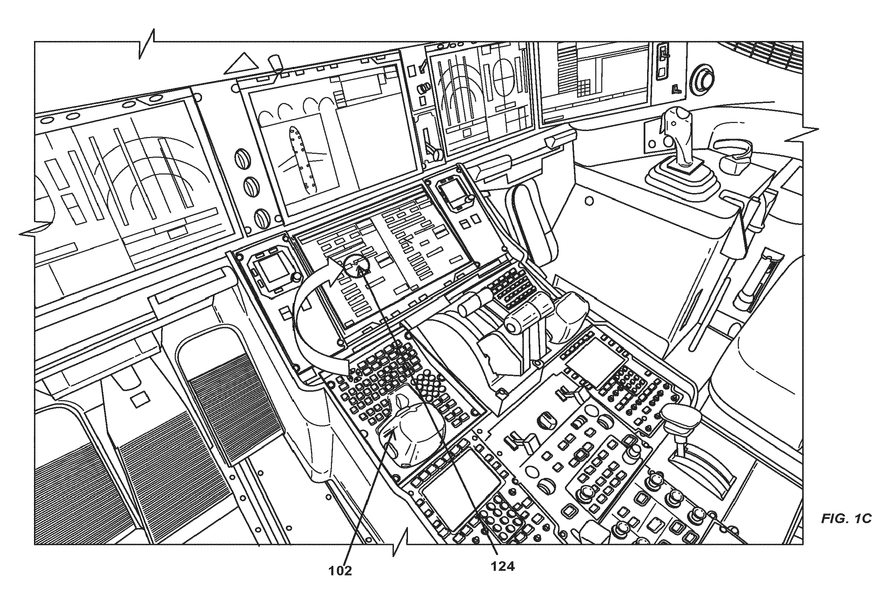

Figure 1C depicts an exemplary illustration showing a KCCU **102** interacting with an avionics display in a simulated cockpit in accordance with embodiments of the subject matter described herein. In some aspects, an operator interacts with the simulated aircraft cockpit through an interactive device such as a computer mouse. For example, by left clicking and dragging a mouse the operator moves the mouse or trackball (e.g. KCCU) cursor onto a picture of an aircraft display (e.g. MFD **108**) located within the simulated cockpit. The operator then clicks on the picture of the display (e.g. MFD **108)** to activate the display. Upon activation, the display shows a colored frame (e.g. pink) around its edge, and the mouse or trackball cursor becomes an avionics cursor **124** which is confined to the colored frame. In this mode, movements of the KCCU track ball are simulated by a grab and drag movement on the computer mouse (e.g. left click with a simultaneous mouse movement). Furthermore, in some aspects, an operator changes the active aircraft display by mouse clicking on a displayed button of the KCCU **102.** For example, clicking on a displayed button associated with an aircraft display (e.g. MFD **108)** makes the aircraft cursor move onto that display. The operator then clicks on this display with the mouse cursor and activates the display for user interaction. Upon activation, the display shows a colored frame (e.g. pink) around its edge, and the mouse or trackball cursor becomes an avionics cursor **124** which is confined to the colored frame.

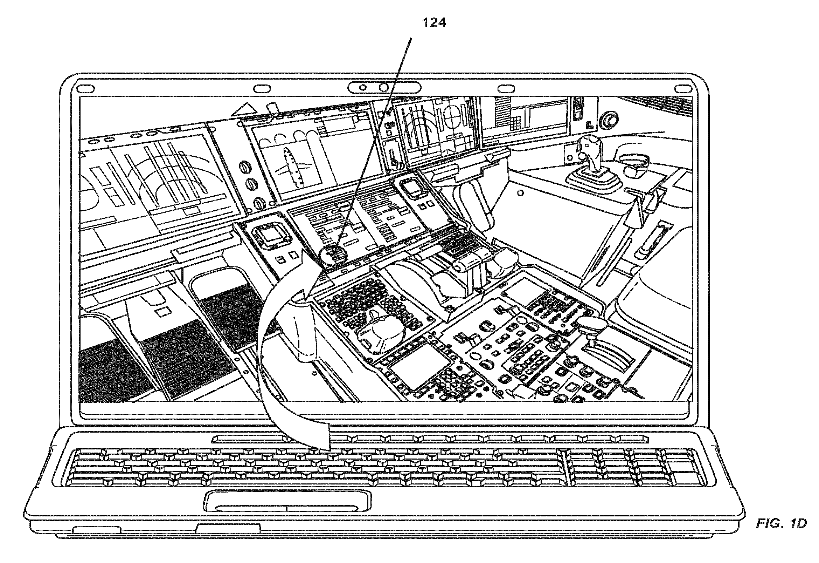

Alternatively, Figure 1D depicts another mode in which a user interacts with avionics displays in the simulated aircraft cockpit in accordance with embodiments of the subject matter described herein. In some aspects, the KCCU **102** is mimicked by interactive devices such as a PC keyboard and mouse, or a laptop computer touchpad. For example, a user enters a KCCU mode by left clicking on an avionics display within the simulated cockpit. Within the KCCU mode, the avionics display appears activated with a colored frame (e.g. pink) around its edge, and the regular mouse cursor becomes no longer visible. An avionics cursor **124** instead appears on the activated avionics display and responds to movements of the mouse, and its range of movement is confined within the boundary of the display.

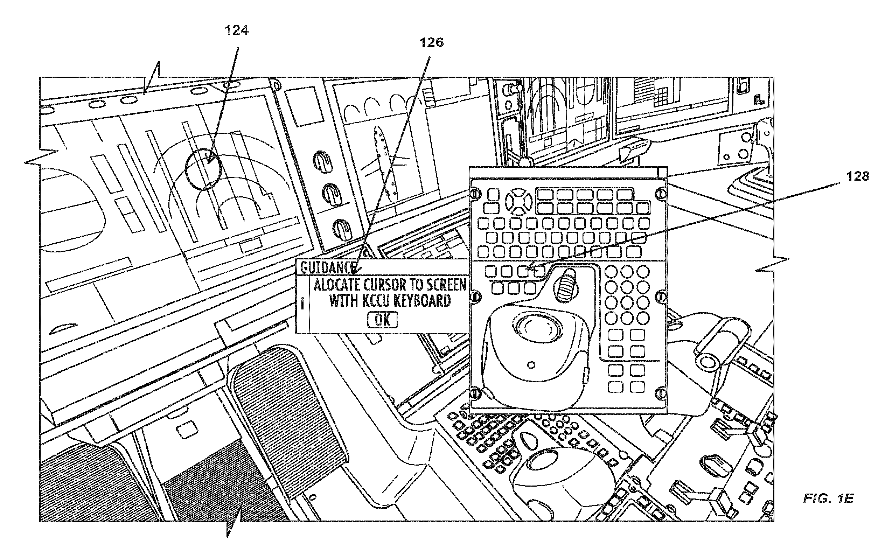

In some aspects, placement of the avionic cursor **124** can be made on the viewing screen to be activated before the KCCU mode is activated. As depicted in Figure 1E, a guidance message **126** is displayed to inform the user to place the avionics cursor on the viewing screen in order to access the KCCU mode. This provides a more realistic simulation experience since on a real airplane an operator will need to place the avionics cursor **124** on a display before user interaction is initiated. In some aspects, an interactive KCCU in 2D is displayed allowing the user to position the cursor without introducing unwanted movement to the 3D simulated cockpit. The user optionally chooses to cancel the guidance message **126,** which will not activate the KCCU mode, or use the cursor keys **128** on the displayed 2D KCCU to position the avionic cursor **124.** For example, clicking MFD key of the cursor keys **128** positions the avionic cursor **124** on the MFD display **108** and activates the KCCU mode. If any other KCCU key in the 2D view is used or the user tries again to activate the KCCU mode without the avionic cursor in the screen, associate cursor keys are highlighted on the displayed KCCU in 2D. In some aspects, the KCCU mode is deactivated automatically when the avionics cursor remains static on the display boundary for a predefined period of time, or the user exits the KCCU mode such as by a right click on the mouse.

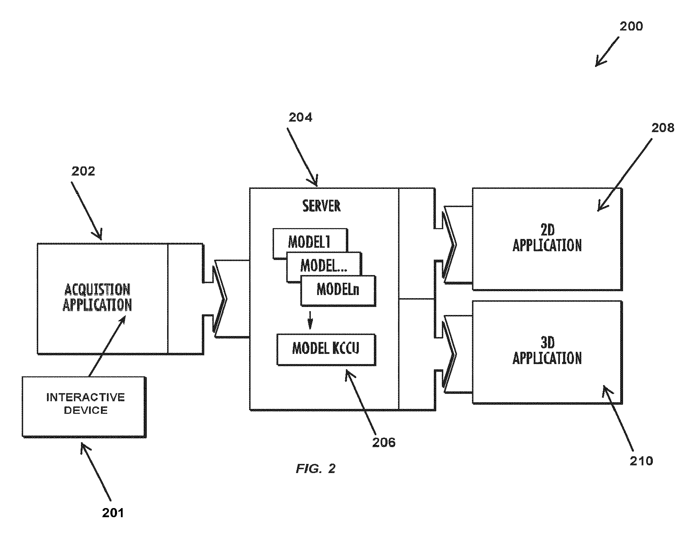

Figure 2 depicts an exemplary illustration of a simulation system, generally designated **200,** for simulating KCCU operations within an aircraft cockpit in accordance with embodiments of the subject matter described herein. As illustrated in Figure 2, the simulation system utilizes a time-stepped simulation architectural model and includes four components that function within a single computer. In some aspects, the simulation system **200** includes an acquisition application module **202** configured to hook mouse and keystroke actions. A hook is a mechanism by which an application module intercepts events such as messages, mouse actions, and keystrokes, and a hook procedure is an application function that intercepts a particular type of event. After a mouse action or keystroke has been intercepted, it is transformed to a simulation data and sent to a time-stepped simulation server **204.** In some aspects, the simulation server **204** is configured to schedule and/or run various aircraft simulation models and manage their static and runtime data (e.g. receive input data from one client and send output data to another client). For example, the simulation server **204** includes a KCCU simulation model **206** configured to manage KCCU trackball movement and keystroke input data. Input data such as trackball movements are transformed by the KCCU simulation model **206** into output data such as cursor positions on an avionic display. Similarly, the KCCU simulation model **206** performs received keystrokes, such as entering and modifying data on the MFD **108,** and/or performing flight plan revisions on the lateral ND **104.**

Furthermore, the simulation server **204** is configured to direct the transformed output data to display client modules such as a 2D **208** and/or 3D application module **210.** As illustrated in Figure 2, the simulation server **204** directs output data from the KCCU simulation model **206** to the 2D application module 208 for displaying the states of the aircraft systems (e.g. lights, screens) on the simulated cockpit. Displaying the aircraft system states is computed by a specific software library shared with the 3D application module **210,** where the library is configured to compute an image upon reception of new output data from the KCCU simulation model **206.** Similarly, transformed output data is directed to the 3D application module **210.** The 3D application module **210** utilizes the same software library used by the 2D application module **208** for generating display images. However, the 3D application module **210** can choose not to use the generated images directly, but instead pre-process and sample the images to generate a mipmap which is then applied as a texture to a shape of polygon in the 3D modeling of the cockpit. The mipmap offers increased rendering speed and reduced aliasing artifacts within the 3D simulation. In addition, to further optimize and improve the rendering performance of the 3D simulation, the KCCU avionics cursor is represented on a different image than the screen image. Instead, the KCCU avionics cursor is in a specific texture on a specific polygon, and only this specific polygon moves whenever the cursor moves. This saves the 3D application module **210** from constantly refreshing its screen images every time the cursor moves, which is very expensive.

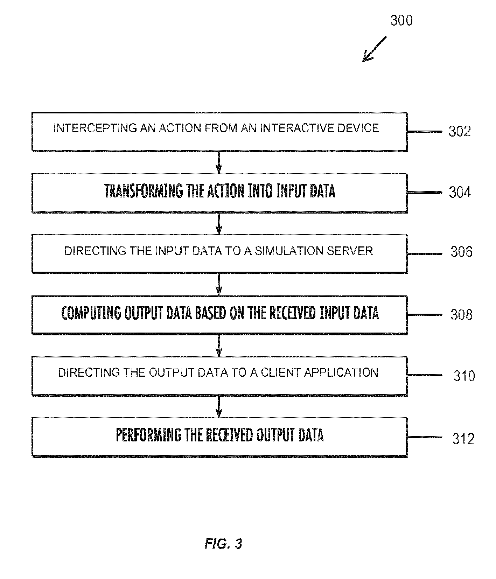

Figure 3 is a flow chart illustrating an exemplary method, generally designated **300,** for managing user inputs to the cockpit simulation in accordance with embodiments of the subject matter described herein. Referring to Figure 3, in block **302,** user actions such as mouse movements and/or key strokes are hooked by an acquisition application module **202.** As described herein, a hook is a mechanism by which an application module intercepts events such as messages, mouse actions, and keystroke, and a hook procedure is an application function that intercepts a particular type of event. The intercepted or hooked mouse action or keystroke is then transformed into simulation data as indicated in block **304.** In block **306** the transformed simulation data is directed to a time-stepped simulation server **204** configured to schedule and/or run various aircraft simulation models and manage their static and run time data (e.g. receive input data from one client and sent output data to another client). In some aspects, as indicated in block **308,** the simulation server **204** computes output data based on the received transformed simulation data. For example, the simulation server **204** includes a KCCU simulation model **206** configured to manage KCCU trackball movement and keystroke input data. The KCCU simulation model **206** calculates output data such as cursor positions on avionic displays based on received inputs such as trackball movements. Similarly, the KCCU simulation model is also usable to enter and modify data on the MFD **108,** and/or perform flight plan revisions on the lateral ND **104** based on the received keystrokes.

Furthermore, the simulation server **204** is configured to direct the computed output data such as cursor positions to client application modules such as the 2D **208** and/or 3D **210** display application modules, as indicated in block **310.** In some aspects, a specific software library shared by the display application modules generates display images, and the display application modules then render the images on a simulation screen, as indicated in block **312.** For example, the 2D application module **208** is configured to render the generated images directly, while the 3D application module **210** pre-processes and samples the images to generate a mipmap which is applied as a texture to a shape of polygon in the 3D modeling of the cockpit.

## Claims

1. A system (200) for simulating user interaction with a simulated aircraft cockpit, the system comprising:
a display unit configured to display at least one avionics display (104, 106, 108) of a simulated aircraft cockpit;
a simulation server (204) configured to receive user interaction data from an interactive device (201) and compute an output data based on the received user interaction data; and
an application module (208, 210) configured to render the output data on a simulated aircraft cockpit screen.

2. The system of claim 1 wherein the simulation server comprises a keyboard cursor control unit (206) module configured to compute the output data based on the received user interaction data.

3. The system of claim 1 or 2 wherein the interactive device comprises a keyboard cursor control unit (102).

4. The system of any preceding claim further comprising an acquisition application module (202) configured to intercept a user interaction, transform the intercepted interaction to a simulation data, and direct the simulation data to the simulation server (204).

5. The system of any preceding claim further comprising a software library configured to compute a display image based on the output data from the simulation server.

6. The system of claim 5 wherein the application module comprises a 2D application module (208) configured to display the computed image.

7. The system of claim 5 wherein the application module comprises a 3D application module (210) configured to process and sample the computed image to generate a mipmap type output data.

8. The system of any preceding claim wherein the application module comprises a 2D application module (208) configured to display a two dimensional interactive device.

9. The system of claim 8 wherein the two dimensional interactive device comprises a keyboard cursor control unit (102) configured to place a cursor key on an avionics display.

10. A method for simulating user interactions with a simulated aircraft cockpit, the method comprising:
at a simulated aircraft cockpit for simulating aircraft operations and comprising a hardware processor:
displaying at least one avionics display of the simulated aircraft cockpit on a display unit;
receiving user interaction data from an interactive device (201), by a simulation server (204);
computing, by the simulation server (204), an output data based on the received user interaction data; and
rendering the output data on a simulated aircraft cockpit screen by an application module (208, 210).

11. The method of claim 10 further comprising the following steps:
placing a cursor on an avionics display;
selecting the avionics display; and
interacting with the selected avionics display.

12. The method of claim 11 wherein selecting the avionics display further comprises replacing the cursor with an avionics cursor (124) confined within the selected avionics display.

13. The method of claim 11 wherein selecting the avionics display further comprises:
receiving a user interaction on an interactive device, consisting in selecting a displayed button associated with an aircraft display or moving an avionics cursor (124) onto an aircraft display;
activating this aircraft display; and
allowing a user to interact with the activated aircraft display.

14. The method of anyone of claims 10 to 13 wherein computing an output data comprises computing a cursor position using a keyboard cursor control unit model.

15. A non-transitory computer readable medium having stored thereon executable instructions that when executed by the processor of a computer control the computer to perform steps comprising:
at a simulated aircraft cockpit for simulating aircraft operations and comprising a hardware processor:
displaying at least one avionics display of the simulated aircraft cockpit on a display unit;
receiving user interaction data from an interactive device (201), by a simulation server (204);
computing, by the simulation server (204), an output data based on the received user interaction data; and
rendering the output data on a simulated aircraft cockpit screen by an application module (208, 210).
